(19) Europäisches Patentamt
European Patent Office
Office européen des brevets

(11) EP 4 728 873 A1

(12) EUROPEAN PATENT APPLICATION
published in accordance with Art. 153(4) EPC

(43) Date of publication:
22.04.2026 Bulletin 2026/17

(21) Application number: 24823172.2

(22) Date of filing: 17.05.2024

(51) International Patent Classification (IPC):
A23K 50/80 (2016.01)        A23K 10/22 (2016.01)
A23K 20/158 (2016.01)       A23K 20/163 (2016.01)
A23K 40/30 (2016.01)

(52) Cooperative Patent Classification (CPC):
A23K 10/22; A23K 20/158; A23K 20/163;
A23K 40/30; A23K 50/80

(86) International application number:
PCT/JP2024/018373

(87) International publication number:
WO 2024/257550 (19.12.2024 Gazette 2024/51)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 14.06.2023 JP 2023097615

(71) Applicant: Nissui Corporation
Tokyo 105-8676 (JP)

(72) Inventors:
• KATAYAMA, Naoto
  Hachioji-shi, Tokyo 192-0991 (JP)
• KOUSAKA, Taeko
  Hachioji-shi, Tokyo 192-0991 (JP)

(74) Representative: Mewburn Ellis LLP
Aurora Building
Counterslip
Bristol BS1 6BX (GB)

(54) **FEED FOR FARMED FISH INCLUDING TUNA FISH, FEED GROUP FOR FARMED FISH, METHOD FOR PRODUCING FEED FOR FARMED FISH INCLUDING TUNA FISH, AND METHOD FOR FARMING TUNA FISH**

(57) A feed for farming tuna species includes a body portion flattened with a length in a thickness direction orthogonal to a width direction and to a longitudinal direction being shorter than a length in the width direction orthogonal to the longitudinal direction. The feed satisfies (A) and/or (B): (A) when a maximum length in the longitudinal direction is defined as a (mm), a maximum length in the width direction is defined as b (mm), and a maximum length in the thickness direction is defined as c (mm), a flattening ratio f1 calculated by Formula (1) is 110 or greater: $f1 = a \times b/c$ (1); and (B) when a volume of the feed for fish farming is defined as V (cm$^3$), and an area of the feed for fish farming in a plan view is defined as A (mm$^2$), $(V/A)^{1/2}$ is 0.110 or less.

**Fig.1**

EP 4 728 873 A1

## Description

Technical Field

The present disclosure relates to a feed for farming tuna species, a feed group for fish farming, a method for producing a feed for farming tuna species, and a method for farming tuna species.

Background Art

From the perspective of nutrition, stable supply, environmental pollution concerns and sustained aquaculture, there have been attempts in fish aquaculture to change over from live feed to compound feed, and various types of compound feed have been developed. Compound feeds aligned with palatability to fish species have been proposed to advance the changeover to compound feeds, particularly for highly ichthyophagous fish species. Patent Document 1 discloses a feed for fish farming for rearing a fish of the family *Scombridae* and particularly a feed for fish farming suitable for stocking and farming tuna species.

Citation List

Patent Documents

Patent Document 1: WO 2019/177024

Summary of Invention

Technical Problem

In farming of tuna species, when feeding is performed with a compound feed, most of the feed fed is often sunk and remains unconsumed. This is assumed to be because when a feed used before is changed to a compound feed, tuna species cannot recognize the compound feed as a feed at an early stage due to the difference in settling velocity. Compound feed is relatively dense and sunk rapidly. Thus, a feed that sinks more slowly appears to be desirable. A relationship between a shape and a settling velocity has been studied for small objects such as sand gravel, but is not well known for compound feed, which is a larger object. Accordingly, the present disclosure provides a feed for farming tuna species, which has a low settling velocity, a feed group for fish farming, and a method for producing a feed for farming tuna species. There is also provided a method for farming tuna species using the feed for farming tuna species.

Solution to Problem

One aspect of the present disclosure provides a feed for farming tuna species, the feed comprising a body portion that is flattened with a length in a thickness direction orthogonal to a width direction and to a longitudinal direction being shorter than a length in the width direction orthogonal to the longitudinal direction, and the feed satisfying at least one selected from the group consisting of (A) and (B) as defined below:

(A) when a maximum length in the longitudinal direction is defined as a (mm), a maximum length in the width direction is defined as b (mm), and a maximum length in the thickness direction is defined as c (mm), a flattening ratio f1 calculated by Formula (1) described below is greater than or equal to 110:

$$f1 = a \times b/c \quad (1)$$

(B) when a volume of the feed for fish farming is defined as V ($cm^3$), and an area of the feed for fish farming in a plan view is defined as A ($mm^2$), $(V/A)^{1/2}$ is less than or equal to 0.110.

The feed for farming tuna species satisfies at least one selected from the group consisting of the flattening ratio f1 of greater than or equal to 110, and the $(V/A)^{1/2}$ of less than or equal to 0.110. When the flattening ratio f1 or $(V/A)^{1/2}$ of the feed for fish farming is within this range, the settling velocity of the feed for fish farming in fish cages can be decreased.
One aspect of the present disclosure provides a feed for farming tuna species having a settling velocity of less than or equal to 15.0 cm/s from a depth of 15.0 cm to a depth of 35.2 cm with a water surface as a reference. Such a feed for fish farming can decrease the settling velocity in fish cages.

One aspect of the present disclosure provides a feed group for fish farming comprising a plurality of feeds for farming tuna species, the feed group having an average settling velocity from a depth of 15.0 cm to a depth of 35.2 cm with a water surface as a reference of less than or equal to 15.5 cm/s. Such a feed group for fish farming can decrease the settling velocity in fish cages.

One aspect of the present disclosure provides a method for producing a feed for farming tuna species, the method comprising a step of pressing and deforming a molded product including a body portion having a substantially cylindrical shape in a radial direction to deform the body portion into a shape with a radial cross-section of the molded product being flattened.

The method for producing a feed for farming tuna species includes the step of pressing and deforming a molded product including a body portion to deform the body portion into a shape with a radial cross-section being flattened. In such a production method, it is possible to easily produce a feed for fish farming having a flattened body portion. The feed for fish farming obtained in the above-described step can decrease the settling velocity in fish cages.

One aspect of the present disclosure provides a method for farming tuna species, the method using the feed for farming tuna species. By such a farming method, the variation in fish body size of farmed fish in a fish cage can be suppressed, and a growth rate of the farmed fish can be improved. Advantageous Effects of Invention

The present disclosure can provide a feed for farming tuna species, which has a low settling velocity, a feed group for fish farming, and a method for producing a feed for farming tuna species. It is also possible to provide a method for farming tuna species, the method using such a feed for farming tuna species.

Brief Description of Drawing

FIG. 1 is a front view of a feed for fish farming.
FIG. 2 is a plan view of the feed for fish farming.
FIG. 3 is a side view of the feed for fish farming.
FIG. 4 is a cross-sectional view taken along line VI-VI in FIG. 1.
FIG. 5 is a cross-sectional view taken along line V-V in FIG. 1.
FIG. 6 is a perspective view illustrating a part of a feed for fish farming.
FIG. 7 is a diagram illustrating an example of a production apparatus of a feed for fish farming.
FIG. 8 is a graph in which a relationship between $(V/A)^{1/2}$ and a settling velocity of a feed for fish farming in each of Examples and Comparative Examples is plotted.
FIG. 9 is a graph in which a relationship between a flattening ratio f1 and a settling velocity of a feed for fish farming in each of Examples and Comparative Examples is plotted.
FIG. 10 is a graph showing a transition of a feeding rate of a Pacific bluefin tuna in a normal feed group and a flattened feed group.

Description of Embodiments

Hereinafter, some embodiments of the present disclosure will be described. However, the following embodiments are examples for describing the present disclosure, and are not intended to limit the present disclosure to the following contents. An upper limit value or a lower limit value of a numerical range in the present disclosure may be substituted with any value shown in Examples. In addition, upper limit values and lower limit values described individually may be combined arbitrarily. The term "to" used in a numerical range indicates a numerical range including the values of the upper limit and the lower limit of the numerical value. For example, "(from) X to Y" indicates a numerical range of "greater than or equal to X and less than or equal to Y". Unless otherwise specified, materials or components exemplified in the present disclosure may be used alone or in combination of two or more. In the description, the same elements or elements having the same function are denoted by the same reference numerals, and redundant description may be omitted. In addition, positional relationships such as up, down, left, and right used in the description are based on the positional relationships shown in the drawings unless otherwise specified.

It is known that a settling velocity of a relatively large object among sand gravel is correlated with several shape variables (Hachiro Kira, "ON THE RELATIONSHIP BETWEEN THE SHAPE FACTORS AND CRITICAL FALL-VELOCITY OF SAND AND GRAVEL GRAINS", [online], Journal of Agriculture and Civil Engineering, 1957 to 1958, Vol. 25, No. 3, p183 to 187, [retrieved on May 31, 2023], Internet, <URL: https://doi.org/10.11408/jjsidre1929.25.183>). However, in the feed for fish farming of the present disclosure, which is different from sand gravel in both material and size, the relationship between the shape and the settling velocity has not been examined.

A feed for farming tuna species according to a first embodiment includes a body portion that is flattened with a length in a thickness direction orthogonal to a width direction and to a longitudinal direction being shorter than a length in the width direction orthogonal to the longitudinal direction, and the feed satisfying at least one selected from the group consisting of (A) and (B) as defined below:

(A) when a maximum length in the longitudinal direction is defined as a (mm), a maximum length in the width direction is defined as b (mm), and a maximum length in the thickness direction is defined as c (mm), a flattening ratio f1 calculated by Formula (1) described below is greater than or equal to 110:

$$f1 = a \times b/c \quad (1)$$

(B) when a volume of the feed for fish farming is defined as V ($cm^3$), and an area of the feed for fish farming in a plan view is defined as A ($mm^2$), $(V/A)^{1/2}$ is less than or equal to 0.110.

A feed for farming tuna species according to a second embodiment has a settling velocity of less than or equal to 15.0 cm/s from a depth of 15.0 cm to a depth of 35.2 cm with a water surface as a reference.

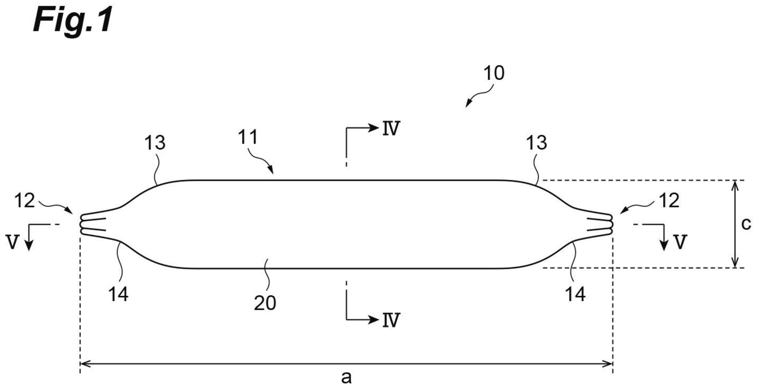

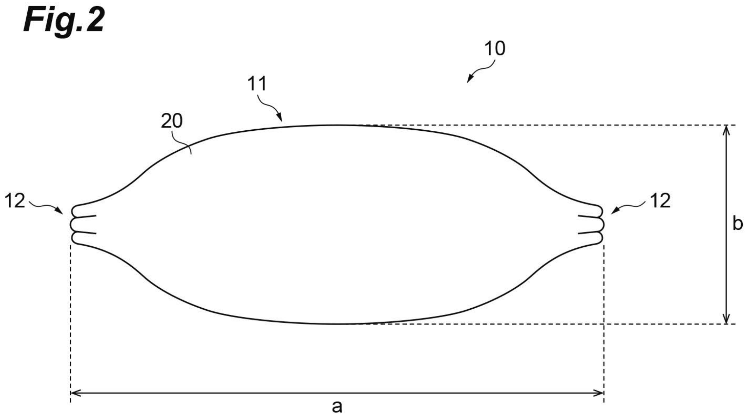

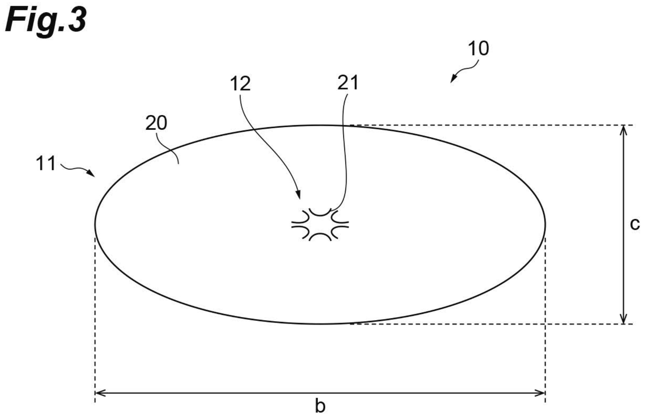

The feed for fish farming, which is a common example of the first embodiment and the second embodiment, has a shape illustrated in FIGS. 1, 2, and 3. As illustrated in FIGS. 1, 2, and 3, a feed for fish farming 10 includes a pair of narrowed portions 12 at both ends in a longitudinal direction, and a body portion 11 between the pair of narrowed portions 12. The maximum length a of the feed for fish farming 10 in the longitudinal direction may be equal to the distance between end portions of the pair of narrowed portions 12. In the body portion 11, the maximum length c in the thickness direction illustrated in FIGS. 1 and 3 is shorter than the maximum length b in the width direction illustrated in FIGS. 2 and 3, among the directions orthogonal to the longitudinal direction. That is, b > c is satisfied.

The value of b may be greater than or equal to 1.1 times, greater than or equal to 1.2 times, greater than or equal to 1.3 times, greater than or equal to 1.4 times, greater than or equal to 1.5 times, greater than or equal to 1.6 times, or greater than or equal to 1.7 times the value of c. There is a risk that the feed for fish farming collapses when the feed is crushed by applying a strong pressure, and thus, the value of b is preferably less than or equal to 3 times, less than or equal to 2.5 times, or less than or equal to 2 times of the value of c. As described above, the feed for fish farming 10 includes the body portion 11 that is flattened in such a manner that the maximum length c in the thickness direction is shorter than the maximum length b in the width direction. Accordingly, the feed for fish farming 10 can be referred to as a flattened feed.

The size of the feed for fish farming 10 is prepared according to the size of fish. Preferably, the size and shape of the feed for fish farming 10 do not deviate greatly from the size and shape of fish eaten as bait by fish in the natural world. From the viewpoint of forming a shape preferred by tuna species, the feed for fish farming 10 may have a body portion having a shape obtained by slightly flattening a cylindrical shape having a length of about from 5 to 20 cm and a radial cross-sectional diameter of about from 1 to 5 cm. The tuna species tends to prefer such a shape. In a case of such a feed, a farmed fish is likely to first capture the body portion in the mouth and then swallow the feed in a vertical position. Such behavior is common to normal feeding behavior, and thus, the feed for fish farming 10 having a substantially cylindrical shape is considered to be suitable for feeding the tuna species. In addition, there occurs a difference in growth between farmed fish due to the presence of a fish that is fed at an early stage and the presence of a fish that is fed late, and thus, there may occur a variation in size of fish bodies. The feed for fish farming 10 has the body portion 11 flattened, and thereby, the settling velocity in water is made slower than that of a feed for fish farming of the same volume having a cylindrical body portion, and the frequency of bringing the farmed fish into contact with the feed can be increased. Accordingly, the farmed fish are fed at an early stage, and the variation in size of the fish bodies of the farmed fish can be reduced. In addition, the growth rate of the farmed fish can be improved.

The maximum lengths a, b, and c can be measured as follows. The feed for fish farming 10 is placed on a flat plate. At this time, the feed for fish farming 10 is placed on the flat plate in the most stable orientation. The maximum length a in the longitudinal direction may be measured in a front view of the feed for fish farming 10 as illustrated in FIG. 1, or may be measured in a plan view of the feed for fish farming 10 as illustrated in FIG. 2. The maximum length b in the width direction may be measured in a plan view of the feed for fish farming 10 as illustrated in FIG. 2, or may be measured in a side view of the feed for fish farming 10 as illustrated in FIG. 3. The maximum length c in the thickness direction may be measured in a front view of the feed for fish farming 10 as illustrated in FIG. 1, or may be measured in a side view of the feed for fish farming 10 as illustrated in FIG. 3. The maximum lengths a, b, and c may be measured using, for example, an electronic caliper or a visual analyzer (trade name: IRIS VA400, available from Alpha M.O.S. Japan, K.K.).

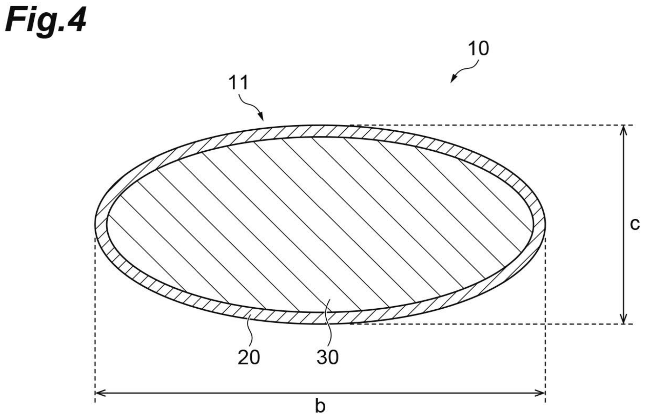

Both the width direction and the thickness direction of the feed for fish farming 10 are orthogonal to the longitudinal direction of the feed for fish farming 10. The width direction and the thickness direction are orthogonal to each other. As illustrated in FIG. 4, the maximum length b in the width direction and the maximum length c in the thickness direction may be lengths measured in one cross-section orthogonal to the longitudinal direction, that is, one transverse cross-section. In this case, the transverse cross-section of the feed for fish farming 10 in which the maximum lengths b and c are measured has the largest cross-sectional area.

The flattening ratio f1 of the feed for fish farming 10 calculated by the above-described Formula (1) may be greater than or equal to 110. It is known that the settling velocity of relatively large sand gravel in water is negatively correlated with the flattening ratio f1 (Hachiro Kira, "ON THE RELATIONSHIP BETWEEN THE SHAPE FACTORS AND CRITICAL FALL-VELOCITY OF SAND AND GRAVEL GRAINS", [online], Journal of Agriculture and Civil Engineering, 1957 to 1958, Vol. 25, No. 3, p183 to 187, [retrieved on May 31, 2023], Internet, <URL: https://doi.org/10.11408/jjsidre1929.25.183>). The feed for fish farming 10 having the flattening ratio f1 of greater than or equal to 110 in the present disclosure is a flattened feed that is sufficiently flattened, and thus, can easily have a shape preferred by the tuna species, and can also sufficiently decrease the settling velocity. When such a feed for fish farming is used for farming of tuna species, the tuna species are fed at an early stage, and the variation in size of the farmed fish can be reduced. In addition, the growth rate of farmed fish can be improved.

As the flattening ratio f1 increases, the settling velocity tends to decrease. From the viewpoint of further reducing the variation in size of the farmed fish, the flattening ratio f1 may be greater than or equal to 115, greater than or equal to 120, greater than or equal to 125, greater than or equal to 130, greater than or equal to 135, or greater than or equal to 140. From the viewpoint of sufficiently increasing the durability of the feed for fish farming 10, the flattening ratio f1 may be less than or equal to 200, or less than or equal to 190. The range of the flattening ratio f1 may be from 110 to 200, from 115 to 200, from 120 to 200, from 125 to 200, from 130 to 200, from 135 to 200, from 140 to 200, from 110 to 190, from 115 to 190, from 120 to 190, from 125 to 190, from 130 to 190, from 135 to 190, or from 140 to 190.

The maximum length a may be from 40 to 200 mm, from 50 to 150 mm, from 60 to 100 mm, from 70 to 80 mm, or from 72 to 78 mm. The maximum length b may be from 10 to 70 mm, from 20 to 50 mm, from 25 to 35 mm, or from 27 to 33 mm. The maximum length c may be from 3 to 50 mm, from 5 to 40 mm, from 8 to 30 mm, from 10 to 20 mm, or 14 to 18 mm. The values of a, b, and c may be appropriately adjusted depending on the size of the tuna species to be fed.

When the volume of the feed for fish farming 10 is represented by V ($cm^3$), and the area of the feed for fish farming 10 in a plan view as illustrated in FIG. 2 is represented as A ($mm^2$), $(V/A)^{1/2}$ may be less than or equal to 0.110. V represents the volume of the settling object, and A represents the area in a plan view. It is known that the settling velocity of relatively large sand gravel in water is positively correlated with $(V/A)^{1/2}$ (Hachiro Kira, "ON THE RELATIONSHIP BETWEEN THE SHAPE FACTORS AND CRITICAL FALL-VELOCITY OF SAND AND GRAVEL GRAINS", [online], Journal of Agriculture and Civil Engineering, 1957 to 1958, Vol. 25, No. 3, p183 to 187, [retrieved on May 31, 2023], Internet, <URL: https://doi.org/10.11408/jjsidre1929.25.183>).

When $(V/A)^{1/2}$ is less than or equal to 0.110, the settling velocity can be sufficiently decreased. When such a feed for fish farming is used for farming of tuna species, the tuna species are fed at an early stage, and the variation in size of the farmed fish can be reduced. In addition, the growth rate of farmed fish can be improved. From the viewpoint of further decreasing the settling velocity, $(V/A)^{1/2}$ may be less than or equal to 0.109, less than or equal to 0.108, or less than or equal to 0.107. From the viewpoint of shortening the time for farmed fish to take in the feed and improving farming efficiency, $(V/A)^{1/2}$ may be greater than or equal to 0.080, greater than or equal to 0.090, or greater than or equal to 0.100. The range of $(V/A)^{1/2}$ may be from 0.080 to 0.110, from 0.080 to 0.109, from 0.080 to 0.108, from 0.080 to 0.107, from 0.090 to 0.110, from 0.090 to 0.109, from 0.090 to 0.108, from 0.090 to 0.107, from 0.100 to 0.110, from 0.100 to 0.109, from 0.100 to 0.108, or from 0.100 to 0.107.

The area A in a plan view can be measured using, for example, a visual analyzer (trade name: IRIS VA400, available from Alpha M.O.S. Japan, K.K.). The volume V can be calculated from the weight (g) of the feed for fish farming 10 and the density of the feed for fish farming 10. The density can be determined by the Archimedes method using the weight of the feed for fish farming 10 and water. For example, the weight of the feed is measured, 100 ml of water is put in a 200-ml measuring cylinder, the feed is put therein, water is immediately drawn up to the line of 100 ml of the measuring cylinder with a dropper, and the weight of the drawn water is measured. The density of the feed can be determined by the following formula.

$$\text{Density of feed (g/cm}^3) = \text{weight (g)/weight of water drawn (g = cm}^3)$$

The volume V of the feed for fish farming 10 may be from 5 to 100 $cm^3$, from 10 to 40 $cm^3$, from 12 to 30 $cm^3$, from 15 to 25 $cm^3$, or from 18 to 22 $cm^3$. The area A of the feed for fish farming 10 in a plan view may be from 500 to 3000 $mm^2$, from 1000 to 2500 $mm^2$, from 1500 to 1800 $mm^2$, or from 1550 to 1750 $mm^2$. The density of the feed for fish farming 10 can be adjusted by components contained therein. In consideration of the components required for efficiently growing the tuna species, the density of the feed for fish farming 10 may be in a range from 1.04 to 1.30 (g/$cm^3$), from 1.05 to 1.25 (g/$cm^3$), from 1.07 to 1.20 (g/$cm^3$), or from 1.08 to 1.15 (g/$cm^3$).

The feed for fish farming 10 satisfies at least one selected from the above-described group consisting of the flattening ratio f1 of greater than or equal to 110 and $(V/A)^{1/2}$ of less than or equal to 0.110. The settling velocity of such a feed for fish farming 10 is sufficiently low. Accordingly, when such a feed for fish farming 10 is used for farming of tuna species, the tuna species are fed at an early stage, and variation in size of farmed fish can be reduced. In addition, the growth rate of farmed fish can be improved.

The settling velocity of the feed for fish farming 10 from a depth of 15.0 cm to a depth of 35.2 cm with a water surface as a reference may be less than or equal to 15.0 cm/s. When the settling velocity is within this range, the frequency of tuna species coming into contact with the feed during farming is improved, and the tuna species can be fed at an early stage, and the variation in size of tuna species after farming can be reduced. From the viewpoint of further reducing the variation in size of farmed fish, the settling velocity may be less than or equal to 14.0 cm/s, less than or equal to 13.5 cm/s, or less than or equal to 13.0 cm/s. From the viewpoint of shortening the time for farmed fish to take in the feed and improving farming efficacy, the settling velocity may be greater than or equal to 1.0 cm/s, greater than or equal to 3.0 cm/s, or greater than or equal to 5.0 cm/s. The settling velocity of the feed for fish farming 10 can be determined by dropping the feed for fish farming 10 in contact with a water surface at an initial speed of 0 into a water tank filled with 3% salt water in a direction in which the thickness direction of the feed for fish farming 10 is orthogonal to the water surface, measuring the time of movement from a depth of 15.0 cm to a depth of 35.2 cm with the water surface as a reference, and dividing the moving length (20.2 cm) by the time of movement. The range of the settling velocity may be from 1.0 to 15.0 cm/s, from 1.0 to 14.0 cm/s, from 1.0 to 13.5 cm/s, from 1.0 to 13.0 cm/s, from 3.0 to 15.0 cm/s, from 3.0 to 14.0 cm/s, from 3.0 to 13.5 cm/s, from 3.0 to 13.0 cm/s, from 5.0 to 15.0 cm/s, from 5.0 to 14.0 cm/s, from 5.0 to 13.5 cm/s, or from 5.0 to 13.0 cm/s.

A plurality of feeds for fish farming may be fed by putting the plurality of feeds into seawater together, instead of putting in the feeds one by one. The feed for fish farming may be fed in a required amount divided into several times, or may be fed in the required amount at once. A plurality of feeds for fish farming is referred to as a feed group for fish farming in the present disclosure. The feed group for fish farming will be described below.

The body portion 11 may have tapered portions 13 that narrow from the center toward both ends in the longitudinal direction. When the tapered portions 13 are provided, the shape of the feed for fish farming 10 becomes close to that of a small fish which is a live feed, and the feed for fish farming 10 is easily recognized as a feed, which can further increase the frequency of the farmed fish coming into contact with the feed for fish farming 10. This can further reduce the variation in size of the fish bodies of the farmed fish.

The narrowed portions 12 may be located at both end portions of the feed for fish farming 10 in the longitudinal direction and protrude in the direction opposite to the center of the feed for fish farming 10. The narrowed portions 12 each may be crimped to an end portion of an outer shell 20. The tapered portions 13 and the narrowed portions 12 of the body portion 11 can be formed by crimping during extrusion molding of a composition of kneaded raw materials using a twin-screw extruder or the like. When the narrowed portions 12 are provided, it is possible to reduce leakage of oils and fats and fish meal contained in the body portion 11.

Between each of the tapered portions 13 and each of the narrowed portions 12, a curved portion 14 having a curved surface outwardly concave and gradually decreasing in diameter toward the end portion is formed. When the curved portion 14 is provided, the outer diameter is made similar to that of a small fish serving as a bait, which makes it possible to increase palatability of the feed for fish farming 10 to the tuna species.

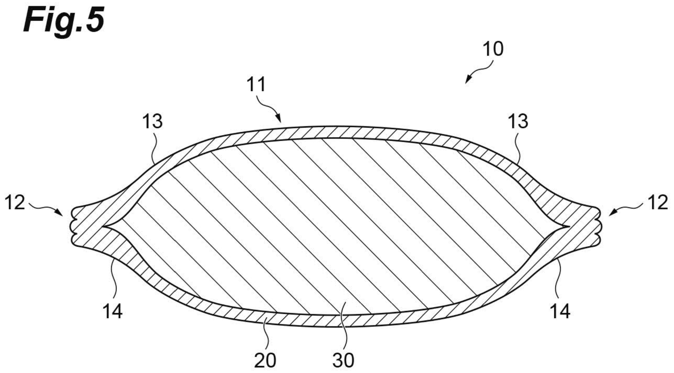

As illustrated in FIGS. 4 and 5, the feed for fish farming 10 may include an inner filling 30 and an outer shell 20 enclosing the inner filling 30. The inner filling 30 may include a composition containing fish meal and oils and fats. The inner filling 30 contains a composition containing fish meal and oils and fats, whereby nutrition contained in the feed for fish farming 10 becomes close to that of small fish, and protein and lipid necessary for growth of farmed fish can be supplied to the farmed fish. The formulation of the composition may be appropriately changed depending on the kind of the tuna species to be fed.

As the fish meal, a variety of fish meal or a powder of crustaceans such as krill commonly used as raw materials for feeds for fish farming may be used. The content of the fish meal in the inner filling 30 may be, for example, greater than or equal to 30 mass%, greater than or equal to 35 mass%, or greater than or equal to 45 mass%. The content of the fish meal may be less than or equal to 70 mass%. The use of the fish meal can supply the tuna species with protein necessary for growth of the tuna species. An example of the content of the fish meal is 30 to 70 mass%.

The oils and fats are not particularly limited, and examples thereof include fish oil, soybean oil, corn oil, and rapeseed oil. The oils and fats may be fish oil, because this can supply the tuna species with lipids rich in omega-3 fatty acids, which are necessary for growth of the tuna species. The content of the oils and fats in the inner filling 30 may be, for example, greater than or equal to 30 mass%, greater than or equal to 35 mass%, or greater than or equal to 45 mass%. The content of the oils and fats may be less than or equal to 70 mass%. An example of the content of the oils and fats is 30 to 70 mass%. When the content of the oils and fats in the feed for fish farming 10 is within this range, the feed for fish farming 10 can be obtained in which the growth efficiency of the tuna species is enhanced by the oils and fats, and other nutrients are also sufficiently added.

From the viewpoint of suppressing leakage of the oils and fats when the feed for fish farming 10 is flattened, a component that reduces fluidity of the oils and fats may be blended. As a component for reducing the fluidity, oil-absorbing polysaccharides such as powdery soybean protein New Fujipro SEH (trade name, available from Fuji Oil Co., Ltd.), Vitacel WF200, Vitacel WF600, or Vitacel WF600/30 (trade name, all available from J. Rettenmaier & Söhne GmbH + Co. KG), Oil Q No. 50 or Oil Q-S (trade name, all available from Nippon Starch Chemical Co., Ltd.), or a dextrin such as Pine Flow (trade name, available from Matsutani Chemical Industry Co., Ltd.); oil-absorbing proteins such as fermented soybeans and isoflavones; or hydrogenated oil in which oil has been hardened through hydrogenation. The content of these components that reduce the fluidity of the oils and fats may be less than or equal to 10 mass%, or less than or equal to 5 mass% of the composition in the inner filling 30 from the viewpoint of improving the palatability to the tuna species.

The hydrogenated oil may be white solid fat obtained by hydrogenating fish oil, soybean oil, corn oil, rapeseed oil, or the like to solidify the oil. The oils and fats before hardening contains unsaturated fatty acids such as oleic acid, linoleic acid, linolenic acid, and other highly unsaturated fatty acids as component fatty acids. Hydrogen is added to unsaturated fatty acids to reduce unsaturated fatty acids, and unsaturated fatty acids eventually become saturated fatty acids to be solid fats, whereby hydrogenated oil is obtained. By adding a hydrogenated oil, a liquid oil can be made into a paste form or solidified form. From the viewpoint of preventing the oils and fats contained in the inner filling 30 from leaking or exuding from the feed for fish farming 10, it is preferable to add hydrogenated oil having a melting point of 50°C or higher. In such hydrogenated oil, the main component of the fatty acids constituting the hydrogenated oil (the most abundant fatty acid in the fatty acid composition) is a fatty acid having greater than or equal to 18 carbon atoms, and the iodine value (mass of iodine absorbed in 100 g of oils and fats (g unit)) is from 0 to 2. The iodine value of hydrogenated oil sold as a fully hydrogenated oil falls within this range. Examples of the hydrogenated oil include fully hydrogenated pork fat (trade name, available from Yokozeki Oil & Fat Industries Co., Ltd.), Unishort K (trade name, available from Fuji Oil Co., Ltd.), Highercin fully hydrogenated rapeseed oil (trade name, available from Yokozeki Oil & Fat Industries Co., Ltd.), beef tallow fully hydrogenated oil (trade name, available from New Japan Chemical Co., Ltd.), soybean fully hydrogenated oil (trade name, available from Yokozeki Oil & Fat Industries Co., Ltd.), rapeseed fully hydrogenated oil (trade name, available from Yokozeki Oil & Fat Industries Co., Ltd.), and TAISET50 (trade name, available from Taiyo Kagaku Co., Ltd.). When the hydrogenated oil is added, the inner filling 30 has an improved viscosity, and the mechanical suitability when the inner filling 30 is wrapped in the outer shell 20 and molded becomes good. In addition, the addition of the hydrogenated oil improves the viscosity of the oils and fats, and thus the leakage of the oil when the feed for fish farming 10 is flattened can be further reduced.

Further, raw materials used in known feeds for fish farming may be added to the composition of the inner filling 30. Examples of the raw material that can be added include: proteins such as live fish, squid meal, krill meal, soybean lees, and corn gluten meal; starch-based materials such as starches, wheat flour, rice flour, tapioca powder, and corn powder; alginic acid and salts thereof; polysaccharides such as sodium carboxymethyl cellulose (CMC), guar gum, dextrins, chitosan, curdlan, pectin, carrageenan, mannan, gellan gum, gum arabic, and edible water-soluble celluloses; vitamins; and minerals.

The outer shell 20 may contain a heated gel of starch and a protein. The component constituting the outer shell 20 is not particularly limited as long as the component can wrap the inner filling 30, and a protein or starch that gels by heating can be used from the viewpoint of improving softness and extensibility. The protein may be fish meat, minced fish meat, krill, gluten, collagen, soybean protein, enzymatically degraded soybean protein, gelatin, or egg white alone, or a mixture of two or more thereof. The starch may be tapioca starch, wheat starch, potato starch, corn starch, bean starch, or waxy corn starch, or processed products of these starches. Food ingredients that contain large quantities of these proteins and starches may be used. A composition containing a protein and a starch has softness and a certain strength because the gel is fixed by heating. A component that is gelled by releasing heat or cooling the heated and melted material may be added. Examples of such a component include gelatin and agar.

From the viewpoint of increasing the nutrient efficiency of the feed for fish farming 10, the outer shell 20 may contain fish meal and oils and fats as long as gelling of the outer shell 20 is not affected. The content of the fish meal in the outer shell 20 may be from 20 to 30 mass%. The content of the oils and fats may be from 5 to 10 mass%.

The starch used in the outer shell 20 is not particularly limited, and tapioca starch, wheat starch, potato starch, corn starch, bean starch, and the like, or processed starches obtained by subjecting these starches to etherification, acetylation, acetyl crosslinking, ether crosslinking, phosphoric acid-crosslinking, or alphatized hydroxypropylphosphoric acid-crosslinking can be used. The content of the starch in the outer shell 20 may be changed as appropriate depending on the fish species to be farmed. The content of the starch in the outer shell 20 may be, for example, from 20 to 80 mass%, or from 20 to 65 mass%.

In the outer shell 20, a gel obtained by adding water to a starch, kneading, and then heating the mixture can exhibit elasticity, softness, and extensibility. From the viewpoint of further improving the palatability to the tuna species, two or more types of processed starches may be combined. For example, different types of processed starches, such as a combination of an etherified starch and a phosphoric acid-crosslinked starch may be combined. It is possible to obtain an even stronger gel by adding a protein such as gluten or soybean protein to such a starch. Gluten-containing wheat flour can also be used instead of gluten. Examples of other raw materials that may be added include: cereal flours such as wheat flour; proteins such as soybean protein, gluten, or egg white; sugars and sugar alcohols such as table sugar or starch syrup; thickening agents such as carrageenan, agar, gellan gum, pullulan, mannan, xanthan gum, locust bean gum, curdlan, pectin, alginic acid or a salt thereof, gum arabic, chitosan, dextrin, or an edible water-soluble cellulose; and salts such as phosphates. For example, it is possible to impart strength to the outer shell 20 by adding wheat flour to a starch. In addition, it is possible to suppress surface stickiness following heating by adding a certain quantity of a protein.

From the viewpoint of improving the quality of the gel in the outer shell 20, additives that are used as quality improving agents in fish paste products and the like may be added as appropriate. Specifically, thickening polysaccharide, soybean protein isolate, sodium bicarbonate, polymeric phosphate, transglutaminase, various protease inhibitors, or the like. may be contained. In particular, to enhance the strength of the gel, a thickening agent such as agar, gellan gum, pullulan, mannan, carrageenan, xanthan gum, locust bean gum, curdlan, pectin, alginic acid or a salt thereof, gum arabic, chitosan, dextrin, or an edible water-soluble cellulose may be added as appropriate. From the viewpoint of enhancing the palatability to the tuna species, the content of the thickening agent in the outer shell 20 may be less than or equal to 10 mass%, less than or equal to 5 mass%, or less than or equal to 1.5% mass%.

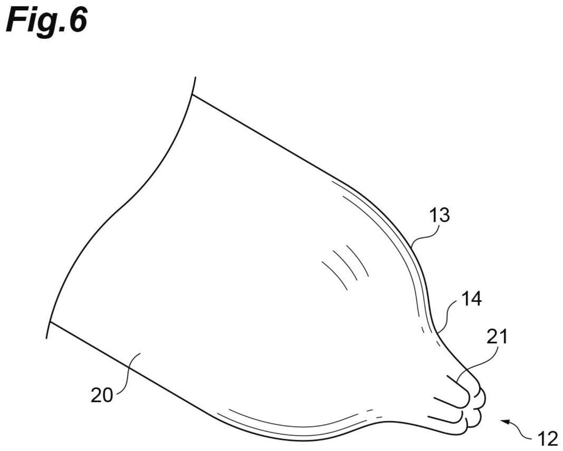

As illustrated in FIGS. 3 and 6, the narrowed portions 12 each have an imprint 21 showing that the diameter of the outer shell 20 forming the outer surface is reduced toward each end portion. This imprint 21 can be composed of, for example, a plurality of radial lines. These lines can be visually or tactilely distinguished, and it is considered that these lines also promote feeding by fish of the tuna species. These lines may be formed as grooves that do not reach the inner filling 30. The imprint 21 may be formed by squeezing the outer shell 20 in the axial direction.

A feed group for fish farming according to one embodiment includes a plurality of feeds for farming tuna species, and an average settling velocity from a depth of 15.0 cm to a depth of 35.2 cm with a water surface as a reference is less than or equal to 15.5 cm/s. The "average settling velocity" in the present disclosure is an arithmetic average value of settling velocity of individual feeds for fish farming. The number of feeds for fish farming constituting the feed group for fish farming is not particularly limited, and may be greater than or equal to 3, greater than or equal to 5, greater than or equal to 10, or greater than or equal to 15. The number may be less than or equal to 1000. The number of feeds for fish farming constituting the feed group for fish farming may be from 3 to 1000, from 5 to 1000, from 10 to 1000, or from 15 to 1000.

From the viewpoint of increasing the frequency of the tuna species coming into contact with the feed during the farming and feeding at an early stage to further reduce the variation in size of the farmed fish, the average settling velocity of the feed group for fish farming may be less than or equal to 15.5 cm/s, less than or equal to 15.0 cm/s, less than or equal to 14.5 cm/s, less than or equal to 14.0 cm/s, less than or equal to 13.5 cm/s, or less than or equal to 13.0 cm/s. In addition, from the viewpoint of shortening the time for farmed fish to take in the feed and improving the farming efficiency, the average settling velocity of the feed group for fish farming may be greater than or equal to 1.0 cm/s, greater than or equal to 3.0 cm/s, or greater than or equal to 5.0 cm/s. The average settling velocity of the feed group for fish farming may be in the range of from 1.0 to 15.5 cm/s, from 1.0 to 15.0 cm/s, from 1.0 to 14.5 cm/s, from 1.0 to 14.0 cm/s, from 1.0 to 13.5 cm/s, from 1.0 to 13.0 cm/s, from 3.0 to 15.5 cm/s, from 3.0 to 15.0 cm/s, from 3.0 to 14.5 cm/s, from 3.0 to 14.0 cm/s, from 3.0 to 13.5 cm/s, from 3.0 to 13.0 cm/s, from 5.0 to 15.5 cm/s, from 5.0 to 15.0 cm/s, from 5.0 to 14.5 cm/s, from 5.0 to 14.0 cm/s, from 5.0 to 13.5 cm/s, or from 5.0 to 13.0 cm/s.

When the settling velocity of the feed group for fish farming does not vary as a whole, it is possible to reduce a feed for fish farming that is not recognized as the feed by the tuna species and is wasted, and thus, the variation in growth rate of the tuna species can be reduced. For example, the standard deviation of the settling velocity of the feeds for fish farming contained in the feed group for fish farming may be less than or equal to 1.30 cm/s, less than or equal to 1.20 cm/s, less than or equal to 1.10 cm/s, less than or equal to 1.00 cm/s, less than or equal to 0.90 cm/s, less than or equal to 0.80 cm/s, or less than or equal to 0.70 cm/s. The standard deviation may be greater than or equal to 0.01 cm/s. The range of the standard deviation of the settling velocity of the feeds for fish farming contained in the feed group for fish farming may be from 0.01 to 1.30 cm/s, from 0.01 to 1.20 cm/s, from 0.01 to 1.10 cm/s, from 0.01 to 1.00 cm/s, from 0.01 to 0.90 cm/s, from 0.01 to 0.80 cm/s, or from 0.01 to 0.70 cm/s.

A method for producing a feed for farming tuna species according to one embodiment includes a step of pressing and deforming a molded product including a body portion having a substantially cylindrical shape in a radial direction to deform the body portion in such a manner that a radial cross-section of the molded product is flattened. When the molded product is pressurized, the length of the molded product in the radial direction is changed, whereby a feed for fish farming including a flattened body portion can be obtained. When the pressure in pressurizing the molded product is changed, the maximum length b in the width direction, the maximum length c in the thickness direction, and the flattening ratio f1 can be adjusted. In the above-described step, the length a of the feed for fish farming 10 in the longitudinal direction may also be changed. The feed for fish farming obtained by such a production method has a low settling velocity in water, and the frequency of the farmed fish coming into contact with the feed for fish farming 10 can be increased.

The molded product is obtained by molding a mixture of the raw material compositions into a substantially cylindrical shape. The raw material compositions can be obtained by mixing the raw materials constituting the inner filling 30 and the outer shell 20 described above. The molded product can be obtained by separately mixing the raw materials of the inner filling 30 and the raw materials of the outer shell 20, and then wrapping the mixture in an extruder having a double nozzle or a filling-wrapping machine. Alternatively, mixing and molding may be continuously performed while heating and mixing the raw materials using a twin-screw extruder having a double nozzle. The heating may be performed at from 60 to 120°C or from 70 to 100°C from the viewpoint of gelling a starch and a protein. As the molded product thus produced, T-sage (available from FARM CHOICE K.K.) may be used.

The "substantially cylindrical shape" in the present disclosure does not require a geometrically strictly cylindrical shape, but is sufficient as long as the shape is recognized as a cylindrical or similar shape at first glance. Therefore, the cross section may be slightly distorted or flat, and the cross-sectional shape may be deformed flat due to its own weight or overlap of the feed. Note that the length and thickness of this substantially cylindrical shape can be appropriately adjusted depending on the type and size of the tuna species to be fed.

The obtained molded product is pressurized in the radial direction to deform the body portion in such a manner that the radial cross section is flattened. The pressurization may be performed manually by an operator, or may be performed by pressing a roller in the radial direction with the roller while rotating.

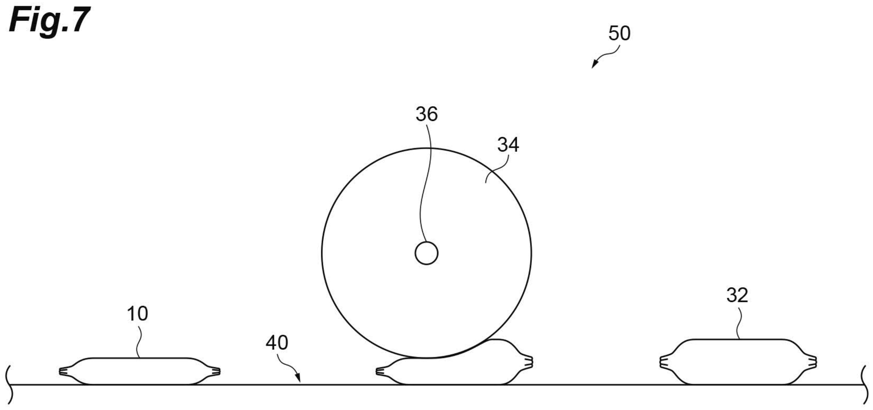

FIG. 7 illustrates an example of a production apparatus for producing the feed for fish farming 10 by pressurizing the molded product with a roller while rotating. A pressurizing device 50 includes a conveyor 40 that conveys a molded product 32 before pressurization and the feed for fish farming 10 after pressurization, and a roller 34 disposed above the conveyor 40. A shaft body 36 that rotatably supports the roller 34 may be suspended by a suspension jig (not illustrated). A gap is formed between the conveyor 40 and the roller 34, and when the molded product 32 conveyed by the conveyor 40 passes through the gap, the roller 34 pressurizes the molded product 32 in the radial direction while rotating. A pressure applied to the molded product 32 can be adjusted by adjusting a clearance of the gap.

The shaft body 36 supporting the roller 34 may be suspended to be movable in the vertical direction. An amount of deformation of the molded product 32, that is, the maximum lengths a, b, and c of the feed for fish farming 10 may be adjusted by changing an amount of movement in the vertical direction. When the pressurizing device 50 is used, the molded product 32 can be deformed more efficiently than when the molded product 32 is flattened by hand, which can improve the production efficiency of the feed for fish farming 10. In addition, variation in shape can be reduced. The production apparatus for producing the feed for fish farming 10 is not limited to the structure illustrated in FIG. 7. For example, the feed for fish farming 10 may be produced by pressurizing the molded products 32 arranged on a stationary table with a roller attached to a shaft body moving in the horizontal direction without providing a conveyor.

In a case where a plurality of feeds for fish farming 10 are produced, the plurality of feeds for fish farming 10 may be produced by the same method. Such feeds for fish farming 10 can suppress variation in settling velocity. In the feed group for fish farming including such feeds for fish farming 10, all the feeds for fish farming 10 can be in contact with the tuna species for a long period of time, and thus the probability that the tuna species recognize the feeds for fish farming 10 as a feed can be increased.

A method for farming fish of tuna species according to one embodiment may include a step of feeding the feed for fish farming 10 to farmed fish. In the above-described farming method, the frequency of the farmed fish coming into contact with the feed for fish farming 10 is increased, and the farmed fish are fed at an early stage. Accordingly, it is possible to suppress variation in size of the fish bodies of the farmed fish and improve the growth rate. The fish body size of the tuna species in a fish cage can be measured with a commercially available camera for measuring a fish body size. The feeding may be directly performed by hand or may be performed using an air feeder. The burden on a worker is reduced by using the air feeder and the feeding can be performed to a wide range at a time.

The present disclosure includes the following embodiments.

[1] A feed for farming tuna species, the feed comprising a body portion that is flattened with a length in a thickness direction orthogonal to a width direction and to a longitudinal direction being shorter than a length in the width direction orthogonal to the longitudinal direction, and the feed satisfying at least one selected from the group consisting of (A) and (B) as defined below:

(A) when a maximum length in the longitudinal direction is defined as a (mm), a maximum length in the width direction is defined as b (mm), and a maximum length in the thickness direction is defined as c (mm), a flattening ratio f1 calculated by Formula (1) described below is greater than or equal to 110:

$$f1 = a \times b/c \quad (1)$$

(B) when a volume of the feed for fish farming is defined as V (cm$^3$), and an area of the feed for fish farming in a plan view is defined as A (mm$^2$), (V/A)$^{1/2}$ is less than or equal to 0.110.

[2] The feed for farming tuna species according to [1], wherein a settling velocity from a depth of 15.0 cm to a depth of 35.2 cm with a water surface as a reference is less than or equal to 15.0 cm/s.

[3] The feed for farming tuna species according to [1] or [2], wherein the body portion includes a tapered portion that narrows in the longitudinal direction from a center toward both ends.

[4] The feed for farming tuna species according to any one of [1] to [3], which comprises: a pair of narrowed portions at both ends in the longitudinal direction; and the body portion between the pair of narrowed portions.

[5] The feed for farming tuna species according to any one of [1] to [4], wherein

the body portion includes a composition containing fish meal and oils and fats, and an outer shell containing a heated gel of starch enclosing the composition, and

a narrowed portion formed by crimping an end portion of the outer shell at both ends in the longitudinal direction is provided.

[6] A feed for farming tuna species, having a settling velocity from a depth of 15.0 cm to a depth of 35.2 cm with a water surface as a reference of less than or equal to 15.0 cm/s.

[7] A feed group for fish farming comprising a plurality of feeds for farming tuna species, and having an average settling velocity from a depth of 15.0 cm to a depth of 35.2 cm with a water surface as a reference of less than or equal to 15.5 cm/s.

[8] The feed group for fish farming according to [7], wherein a standard deviation of the settling velocity of the feeds for fish farming is less than or equal to 1.30 cm/s.

[9] A method for producing a feed for farming tuna species, the method comprising a step of pressing and deforming, in a radial direction, a molded product including a body portion having a substantially cylindrical shape to deform the body portion into a shape with a radial cross-section of the molded product being flattened.

[10] The method for producing a feed for farming tuna species according to [9], wherein in the aforementioned step, the body portion is deformed by pressing the body portion with a roller while rotating.

[11] A method for farming tuna species, the method comprising a step of feeding the feed for farming tuna species described in any one of [1] to [6], the feed group for fish farming described in [7] or [8], or the feed for farming tuna species obtained by the production method described in [9] or [10]. Examples

Hereinafter, the contents of the present disclosure will be described more specifically with reference to Examples and Comparative Examples. Note that the present disclosure is not limited to the following Examples.

Preparation of Flattened Feed

Examples 1 to 16 and Comparative Examples 1 to 17

A plurality of feeds for farming tuna species (available from FARM CHOICE K.K., trade name: T-sage, standard: SS) having a cylindrical body portion were prepared. Densities of 33 feeds were measured by the Archimedes method, and the average value of the densities was 1.117 (g/cm$^3$), and the standard deviation of the densities was 0.017 (g/cm$^3$). Note that the minimum value of the densities was 1.071 (g/cm$^3$), and the maximum value of the densities was 1.148 (g/cm$^3$). Among these, 17 feeds were used as control feeds (Comparative Examples 1 to 17). The other 16 feeds were each pressurized and crushed in the radial direction of the body portion, and obtained flattened feeds each having a flattened body portion were used as Examples (Examples 1 to 16).

An area A (mm$^2$) in a plan view was measured using a visual analyzer (trade name: IRIS VA400, available from Alpha M.O.S. Japan, K.K.). The maximum length a (mm) in the longitudinal direction, the maximum length b (mm) in the width direction, and the maximum length c (mm) in the thickness direction of each of the control feeds and the flattened feeds were measured using an electronic caliper. A weight Ws (g) was measured using an electronic balance. Table 1 shows the measurement results of the maximum length a (mm) in the longitudinal direction, the maximum length b (mm) in the width direction, the maximum length c (mm) in the thickness direction, the area A (mm$^2$), and the weight Ws (g) measured in each of Comparative Examples and each of Examples. The measured a, b, and c were substituted into Formula (1) described below to calculate the flattening ratio f1. From the weight and density of each feed, the volume V (cm$^3$) was calculated, and from the volume V and the area A, $(V/A)^{1/2}$ was calculated. The calculation results of the volume V (cm$^3$), the flattening ratio f1, and $(V/A)^{1/2}$ of each of Comparative examples and each of Examples are shown in Table 2.

$$f1 = a \times b/c \quad (1)$$

Measurement of Settling Velocity

A pair of narrowed portions of each feed was held with fingers and brought close to the water surface in such a direction that the thickness direction was orthogonal to the water surface of a water tank. When the lower end of the feed came into contact with the water surface, the feed was released and the sample was dropped into the water tank. A time required for the feed to sink from a depth of 15 cm to a depth of 35.2 cm with the water surface as a reference was measured. A settling velocity of each feed was calculated from a moving distance (20.2 cm) and the required time. The obtained results are shown in Table 2.

[Table 1]

| | a (mm) | b (mm) | c (mm) | Area A (mm$^2$) | Weight Ws (g) |
|---|---|---|---|---|---|
| Comparative Example 1 | 76.43 | 24.79 | 18.81 | 1478.13 | 20.58 |
| Comparative Example 2 | 76.76 | 24.42 | 19.71 | 1429.00 | 20.88 |
| Comparative Example 3 | 76.77 | 25.38 | 18.38 | 1412.76 | 20.77 |
| Comparative Example 4 | 76.21 | 25.42 | 21.15 | 1414.82 | 22.50 |
| Comparative Example 5 | 76.62 | 26.04 | 19.74 | 1479.97 | 22.41 |
| Comparative Example 6 | 76.36 | 24.40 | 19.14 | 1355.55 | 20.16 |
| Comparative Example 7 | 76.73 | 24.08 | 19.81 | 1369.45 | 20.89 |
| Comparative Example 8 | 77.01 | 26.06 | 19.55 | 1542.95 | 22.75 |
| Comparative Example 9 | 76.25 | 25.27 | 21.13 | 1492.13 | 22.49 |
| Comparative Example 10 | 80.41 | 23.79 | 19.02 | 1492.87 | 21.34 |
| Comparative Example 11 | 75.85 | 26.57 | 20.31 | 1537.00 | 22.81 |
| Comparative Example 12 | 77.43 | 25.44 | 20.24 | 1528.97 | 22.53 |
| Comparative Example 13 | 77.93 | 23.04 | 20.10 | 1425.18 | 20.64 |
| Comparative Example 14 | 77.59 | 23.62 | 19.16 | 1456.39 | 20.92 |
| Comparative Example 15 | 77.59 | 23.27 | 18.94 | 1414.05 | 20.31 |
| Comparative Example 16 | 77.17 | 23.74 | 19.08 | 1404.26 | 20.60 |
| Comparative Example 17 | 78.03 | 24.54 | 19.28 | 1445.39 | 21.63 |
| Example 1 | 77.97 | 27.70 | 16.28 | 1703.34 | 21.36 |
| Example 2 | 74.83 | 28.33 | 16.34 | 1696.16 | 21.26 |
| Example 3 | 74.50 | 28.75 | 16.35 | 1680.58 | 21.08 |
| Example 4 | 75.38 | 27.72 | 17.08 | 1639.97 | 21.11 |
| Example 5 | 73.84 | 28.24 | 16.77 | 1632.84 | 20.85 |
| Example 6 | 75.78 | 28.49 | 16.58 | 1707.05 | 21.79 |
| Example 7 | 74.65 | 27.35 | 17.05 | 1600.71 | 21.14 |
| Example 8 | 74.17 | 27.96 | 16.83 | 1626.34 | 20.70 |
| Example 9 | 75.02 | 27.70 | 16.57 | 1661.29 | 21.03 |
| Example 10 | 77.92 | 28.39 | 17.15 | 1690.39 | 22.49 |
| Example 11 | 76.23 | 27.63 | 16.94 | 1690.37 | 21.36 |
| Example 12 | 77.42 | 28.03 | 15.97 | 1709.47 | 21.45 |
| Example 13 | 75.08 | 27.95 | 16.06 | 1703.95 | 20.98 |
| Example 14 | 75.35 | 27.70 | 16.47 | 1596.61 | 20.87 |
| Example 15 | 76.85 | 27.39 | 17.69 | 1666.13 | 21.79 |
| Example 16 | 75.68 | 28.49 | 17.09 | 1677.95 | 21.72 |

[Table 2]

| | Settling time (sec) | Volume V (cm3) | Flattening ratio f1 | (V/A)$^{1/2}$ | Settling velocity (cm/s) |
|---|---|---|---|---|---|
| Comparative Example 1 | 1.25 | 18.42 | 100.7 | 0.112 | 16.22 |

(continued)

| | Settling time (sec) | Volume V ($_{cm3}$) | Flattening ratio f1 | $(V/A)^{1/2}$ | Settling velocity (cm/s) |
|---|---|---|---|---|---|
| Comparative Example 2 | 1.41 | 18.69 | 95.1 | 0.114 | 14.38 |
| Comparative Example 3 | 1.24 | 18.59 | 106.0 | 0.115 | 16.36 |
| Comparative Example 4 | 1.43 | 20.14 | 91.6 | 0.119 | 14.18 |
| Comparative Example 5 | 1.44 | 20.06 | 101.1 | 0.116 | 14.00 |
| Comparative Example 6 | 1.46 | 18.05 | 97.3 | 0.115 | 13.85 |
| Comparative Example 7 | 1.24 | 18.70 | 93.3 | 0.117 | 16.36 |
| Comparative Example 8 | 1.12 | 20.37 | 102.7 | 0.115 | 18.12 |
| Comparative Example 9 | 1.32 | 20.13 | 91.2 | 0.116 | 15.36 |
| Comparative Example 10 | 1.48 | 19.10 | 100.6 | 0.113 | 13.69 |
| Comparative Example 11 | 1.34 | 20.42 | 99.2 | 0.115 | 15.09 |
| Comparative Example 12 | 1.28 | 20.17 | 97.3 | 0.115 | 15.74 |
| Comparative Example 13 | 1.27 | 18.48 | 89.3 | 0.114 | 15.94 |
| Comparative Example 14 | 1.20 | 18.73 | 95.7 | 0.113 | 16.90 |
| Comparative Example 15 | 1.33 | 18.18 | 95.3 | 0.113 | 15.25 |
| Comparative Example 16 | 1.12 | 18.44 | 96.0 | 0.115 | 18.08 |
| Comparative Example 17 | 1.31 | 19.36 | 99.3 | 0.116 | 15.46 |
| Example 1 | 1.40 | 19.12 | 132.7 | 0.106 | 14.42 |
| Example 2 | 1.51 | 19.03 | 129.7 | 0.106 | 13.35 |
| Example 3 | 1.52 | 18.87 | 131.0 | 0.106 | 13.33 |
| Example 4 | 1.44 | 18.90 | 122.3 | 0.107 | 14.06 |
| Example 5 | 1.64 | 18.67 | 124.3 | 0.107 | 12.35 |
| Example 6 | 1.43 | 19.51 | 130.2 | 0.107 | 14.18 |
| Example 7 | 1.59 | 18.93 | 119.7 | 0.109 | 12.68 |
| Example 8 | 1.41 | 18.53 | 123.2 | 0.107 | 14.32 |
| Example 9 | 1.44 | 18.83 | 125.4 | 0.106 | 14.00 |
| Example 10 | 1.43 | 20.13 | 129.0 | 0.109 | 14.10 |
| Example 11 | 1.59 | 19.12 | 124.3 | 0.106 | 12.71 |
| Example 12 | 1.48 | 19.20 | 135.9 | 0.106 | 13.69 |
| Example 13 | 1.45 | 18.78 | 130.7 | 0.105 | 13.92 |
| Example 14 | 1.56 | 18.68 | 126.7 | 0.108 | 12.94 |
| Example 15 | 1.46 | 19.51 | 119.0 | 0.108 | 13.85 |
| Example 16 | 1.51 | 19.44 | 126.2 | 0.108 | 13.40 |

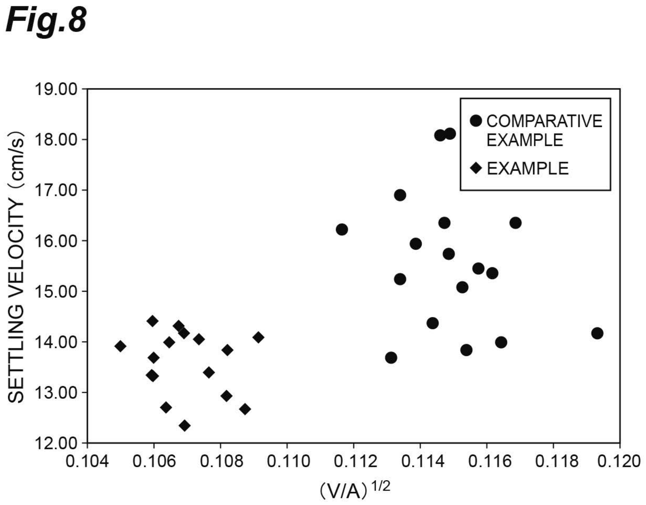

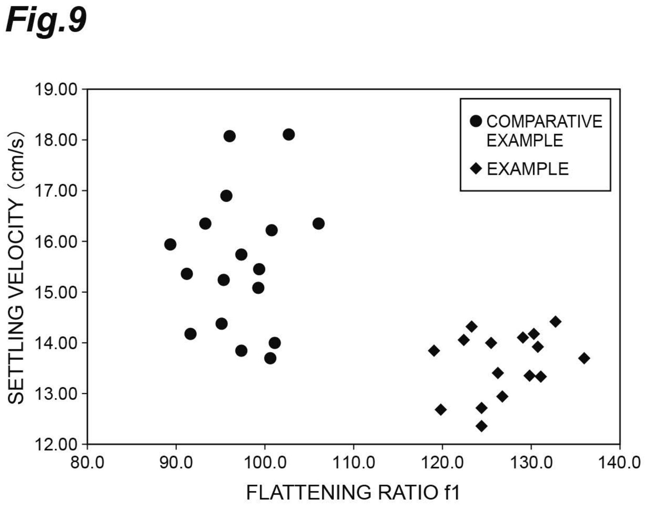

FIG. 8 is a graph showing the results in Table 2 plotted with the vertical axis representing the settling velocity, and the horizontal axis representing $(V/A)^{1/2}$. FIG. 9 is a graph showing the results of Table 2 plotted with the vertical axis representing the settling velocity and the horizontal axis representing the flattening ratio f1.

The average settling velocity of the feed group for fish farming of Examples 1 to 16 was 13.58 cm/s, and the average settling velocity of the feed group for fish farming of Comparative Examples 1 to 17 was 15.59 cm/s. The standard deviation of the settling velocity of the feed group for fish farming of Examples 1 to 16 was 0.62 cm/s, and the standard deviation of the settling velocity of the feed group for fish farming of Comparative Examples 1 to 17 was 1.31 cm/s. As shown in FIG. 8, the settling velocity tends to increase as the value of $(V/A)^{1/2}$ increases. As shown in FIG. 9, the settling velocity tends to decrease as the flattening ratio f1 increases. As shown in FIGS. 8 and 9, when the feed was flattened, the variation in settling velocity was reduced, and it was possible to decrease the settling velocity of the entire feed during feeding. When such a feed group for fish farming is used, the entire feed can be brought into contact with tuna more efficiently. As a factor of decreasing the settling velocity, it is considered that the area A of the feed is increased by flattening the feed, and the feed is easily subjected to resistance when falling in water. When such a feed having a low settling velocity is used for farming of tuna, the frequency of contact between the feed and the tuna is improved, and the variation in feeding of tuna in the fish cage can be reduced. Furthermore, when the frequency of tuna coming into contact with the feed is improved, the fish body size of tuna can be increased, and tuna with superior quality can be farmed.

Experiment of Farming of Pacific Bluefin Tuna

To confirm the effect of the flattened feed, the control feed and the flattened feed were fed into a fish cage in which a Pacific bluefin tuna was actually farmed, and an experiment was performed to compare the feeding rate and the growth rate of the Pacific bluefin tuna in the fish cage for each feed.

A plurality of feeds for farming tuna species (available from FARM CHOICE, trade name: T-sage, standard: SSS) having a cylindrical body portion were prepared. Some of these were used as control feeds. The others were each pressurized and deformed in the radial direction by pressing the body portion having a substantially cylindrical shape while rotating the roller against the body portion, thereby obtaining a flattened feed having a shape as illustrated in FIGS. 1 to 6. Fifteen control feeds and fifteen flattened feeds were prepared. A control feed group consisting of the 15 control feeds was designated as Comparative Example 18, and a flattened feed group consisting of the 15 flattened feeds was designated as Example 17. In Comparative Example 18 and Example 17, the settling velocity of each feed in the group was measured, and the average settling velocity and the standard deviation were calculated. As a result, the average settling velocity of Comparative Example 18 was 16.2 cm/s, and the standard deviation was 1.4 cm/s. The average settling velocity of Example 17 was 14.3 cm/s and the standard deviation was 0.7 cm/s.

A feeding test of Pacific bluefin tuna was performed using the control feed group (control: Comparative Example 18) and the flattened feed group (test: Example 17) prepared as described above. A fish cage fed with the control feed was designated as a control feed section, and a fish cage fed with the flattened feed was designated as a flattened feed section to be used for farming Pacific bluefin tuna, and the growth conditions of Pacific bluefin tuna depending on the feed were compared. Feeding for Pacific bluefin tuna that had been reared with a moist pellet was stopped for one day, and then the control feed was fed in the control feed section, and the flattened feed was fed in the flattened feed section. The feeding period was 3 months for each. As the feeding, satiation feeding was performed once in the morning and once in the afternoon (twice/day), and a feeding amount in each test section was recorded. Note that in the flattened feed section, the flattened feed was used for one month from the start of feeding, and thereafter, the control feed was used as in the control feed section.

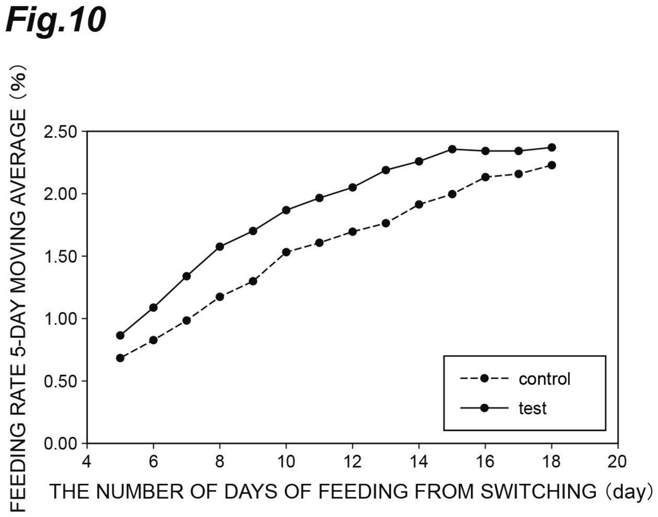

FIG. 10 shows the transition of the feeding rate of the Pacific bluefin tuna from the start of feeding in FIG. 10. The feeding rate shown in FIG. 10 was obtained by calculating the ratio of an amount of feed consumed to the body weight of the Pacific bluefin tuna as a moving average for 5 days.

As shown in FIG. 10, the rise of the feeding rate to the Pacific bluefin tuna was faster in the flattened feed section than in a normal feed section. This is considered to be because the average settling velocity of the flattened feed in water was lower, and thus the contact frequency of the Pacific bluefin tuna with the feed was improved, whereby the Pacific bluefin tuna was able to recognize the feed as a feed at an early stage. Accordingly, it has been confirmed that the use of the flattened feed enables the Pacific bluefin tuna to be fed at an early stage.

Next, the growth state of the Pacific bluefin tuna was confirmed three months after the start of feeding. A fish school was photographed using a camera (trade name: UC-600, available from FURUNO ELECTRIC CO., LTD.) for measuring a size of a fish body, which was sunk in each fish cage, and an average value of the growth rate was calculated from the body weight of the Pacific bluefin tuna from the beginning to the end of the period by image analysis. Body weight data of UC-600 is classified into four stages according to the data accuracy of each observed individual. Among the four stages of classification, data of A, B, and C having relatively high data accuracy were used. The results after 3 months from the start of feeding are shown in Table 3.

[Table 3]

| | Comparative Example 18 | Example 17 |
|---|---|---|
| | Control feed section | Flattened feed section |
| Rearing period (day) | 87 | 87 |

(continued)

| | Comparative Example 18 | Example 17 |
|---|---|---|
| | Control feed section | Flattened feed section |
| Fish count at beginning of period | 1562 | 1801 |
| Fish count at end of period | 1549 | 1766 |
| Body weight at beginning of period (kg) (average ± standard deviation) | 10.8 ± 1.6 | 9.2 ± 1.6 |
| Fish count photographed at beginning of period | 388 | 161 |
| Body weight at end of period (kg) (average ± standard deviation) | 14.3 ± 2.7 | 12.7 ± 2.4 |
| Fish count photographed at end of period | 427 | 502 |
| Growth rate (%) | 133 | 138 |

As shown in Table 3, when the fish school of the Pacific bluefin tuna three months after the start of feeding was compared, the standard deviation of the body weight of the fish school at the end of the period was small in the flattened feed group. Thus, it has been confirmed that the use of the flattened feed can reduce the variation in fish body size of the fish school. When growth rates of the Pacific bluefin tuna were compared three months after the start of feeding, it has been found that the growth rate of the Pacific bluefin tuna of the flattened feed section is higher than that of the Pacific bluefin tuna of the control feed section, and the Pacific bluefin tuna becomes larger. Based on this, it has been confirmed that the farming of Pacific bluefin tuna using the flattened feed can grow large Pacific bluefin tuna with less variation in quality than the farming using the control feed.

Industrial Applicability

The present disclosure can provide a feed for farming tuna species having a low settling velocity, a feed group for fish farming, and a method for producing a feed for farming tuna species. In addition, it is possible to provide a method for farming tuna species using such a feed for farming tuna species. Reference Signs List

10 ⋯ Feed for fish farming, 11 ⋯ Body portion, 12 ⋯ Narrowed portion, 13 ⋯ Tapered portion, 14 ⋯ Curved portion, 21 ⋯ Imprint, 20 ⋯ Outer shell, 30 ⋯ Inner filling, a ⋯ Maximum length in the longitudinal direction, b ⋯ Maximum length in the width direction, c ⋯ Maximum length in the thickness direction, 50 ⋯ Pressurizing device, 32 ⋯ Molded product, 34 ⋯ Roller, 36 ⋯ Shaft body, 40 ⋯ Conveyor.

**Claims**

1.  A feed for farming tuna species, the feed comprising a body portion that is flattened with a length in a thickness direction orthogonal to a width direction and to a longitudinal direction being shorter than a length in the width direction orthogonal to the longitudinal direction, and the feed satisfying at least one selected from the group consisting of (A) and (B) as defined below:

    (A) when a maximum length in the longitudinal direction is defined as a (mm), a maximum length in the width direction is defined as b (mm), and a maximum length in the thickness direction is defined as c (mm), a flattening ratio f1 calculated by Formula (1) described below is greater than or equal to 110:

    $$f1 = a \times b/c \quad (1)$$

    (B) when a volume of the feed for fish farming is defined as V (cm$^3$), and an area of the feed for fish farming in a plan view is defined as A (mm$^2$), (V/A)$^{1/2}$ is less than or equal to 0.110.

2.  The feed for farming tuna species according to claim 1, wherein a settling velocity from a depth of 15.0 cm to a depth of 35.2 cm with a water surface as a reference is less than or equal to 15.0 cm/s.

3.  The feed for farming tuna species according to claim 1, wherein the body portion includes a tapered portion that narrows in the longitudinal direction from a center toward both ends.

4.  The feed for farming tuna species according to claim 1, which comprises: a pair of narrowed portions at both ends in the longitudinal direction; and the body portion between the pair of narrowed portions.

5.  The feed for farming tuna species according to claim 1, wherein

    the body portion includes a composition containing fish meal and oils and fats, and an outer shell containing a heated gel of starch enclosing the composition, and
    a narrowed portion formed by crimping an end portion of the outer shell at both ends in the longitudinal direction is provided.

6.  A feed for farming tuna species, having a settling velocity from a depth of 15.0 cm to a depth of 35.2 cm with a water surface as a reference of less than or equal to 15.0 cm/s.

7.  A feed group for fish farming, comprising a plurality of feeds for farming tuna species, and having an average settling velocity from a depth of 15.0 cm to a depth of 35.2 cm with a water surface as a reference of less than or equal to 15.5 cm/s.

8.  The feed group for fish farming according to claim 7, wherein a standard deviation of the settling velocity of the feeds for fish farming is less than or equal to 1.30 cm/s.

9.  A method for producing a feed for farming tuna species, the method comprising a step of pressing and deforming, in a radial direction, a molded product including a body portion having a substantially cylindrical shape to deform the body portion into a shape with a radial cross-section of the molded product being flattened.

10. The method for producing a feed for farming tuna species according to claim 9, wherein in the aforementioned step, the body portion is deformed by pressing the body portion with a roller while rotating.

11. A method for farming tuna species, comprising feeding the feed for farming tuna species described in any one of claims 1 to 6, the feed group for fish farming described in claim 7 or 8, or the feed for farming tuna species obtained by the production method described in claim 9 or 10.

EP 4 728 873 A1

*Fig.1*

Fig.2

EP 4 728 873 A1

Fig.3

EP 4 728 873 A1

Fig.4

Fig.5

**Fig.6**

**Fig.7**

EP 4 728 873 A1

**Fig.8**

...

*Fig.9*

## Fig.10

## INTERNATIONAL SEARCH REPORT

| | International application No. |
|---|---|
| | **PCT/JP2024/018373** |

| A. | CLASSIFICATION OF SUBJECT MATTER |
|---|---|

*A23K 50/80*(2016.01)i; *A23K 10/22*(2016.01)i; *A23K 20/158*(2016.01)i; *A23K 20/163*(2016.01)i; *A23K 40/30*(2016.01)i
FI: A23K50/80; A23K10/22; A23K20/163; A23K40/30 Z; A23K20/158

According to International Patent Classification (IPC) or to both national classification and IPC

| B. | FIELDS SEARCHED |
|---|---|

Minimum documentation searched (classification system followed by classification symbols)

A23K50/80; A23K10/22; A23K20/158; A23K20/163; A23K40/30

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | WO 2019/177024 A1 (NIPPON SUISAN KAISHA LTD.) 19 September 2019 (2019-09-19) paragraphs [0009]-[0052], fig. 1-4 | 1-5, 9-10 |
| Y | JP 7-222556 A (EWOS AB) 22 August 1995 (1995-08-22) paragraphs [0014]-[0028], fig. 5 | 1-5, 9-10 |
| X | JP 3243497 B2 (NISSHIN FLOUR MILLING CO.) 07 January 2002 (2002-01-07) paragraphs [0018], [0036] | 6-8, 11 |
| Y | same as above | 2 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **09 July 2024** | **30 July 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/018373**

| Patent document cited in search report | | | Publication date (day/month/year) | Patent family member(s) | Publication date (day/month/year) |
|---|---|---|---|---|---|
| WO | 2019/177024 | A1 | 19 September 2019 | US 2021/0015122 A1 paragraphs [0019]-[0069], fig. 1-fig. 4 EP 3766360 A1 JP 2023-156412 A | |
| JP | 7-222556 | A | 22 August 1995 | EP 664961 A1 page 3, line 20 to page 4, line 14 | |
| JP | 3243497 | B2 | 07 January 2002 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019177024 A

**Non-patent literature cited in the description**

- **HACHIRO KIRA**. ON THE RELATIONSHIP BETWEEN THE SHAPE FACTORS AND CRITICAL FALL-VELOCITY OF SAND AND GRAVEL GRAINS. *Journal of Agriculture and Civil Engineering*, 1957, vol. 25 (3), 183-187, https://doi.org/10.11408/jj-sidre1929.25.183>